# EUROPEAN PATENT SPECIFICATION

(11) **EP 4 242 386 B1**
(45) Date of publication and mention of the grant of the patent: **29.10.2025**
(21) Application number: 23156534.2
(22) Date of filing: 14.02.2023
(51) Int. Cl.: E02F 9/24, E02F 9/26

(54) **WORK MACHINE CONTROL SYSTEM, WORK MACHINE, WORK MACHINE CONTROL METHOD, AND WORK MACHINE CONTROL PROGRAM**
ARBEITSMASCHINENSTEUERUNGSSYSTEM, ARBEITSMASCHINE, ARBEITSMASCHINENSTEUERUNGSVERFAHREN UND ARBEITSMASCHINENSTEUERUNGSPROGRAMM
SYSTÈME DE COMMANDE DE MACHINE DE TRAVAIL, MACHINE DE TRAVAIL, PROCÉDÉ DE COMMANDE DE MACHINE DE TRAVAIL ET PROGRAMME DE COMMANDE DE MACHINE DE TRAVAIL

(30) Priority: 07.03.2022 JP 2022034187; 07.03.2022 JP 2022034188
(43) Date of publication of application: 13.09.2023
(73) Proprietor: Yanmar Holdings Co., Ltd., Osaka-shi, Osaka (JP)
(72) Inventor: DANGUCHI, Masashi, Fukuoka (JP)
(74) Representative: Novagraaf International SA

(56) References cited:
- JP-A- 2014 181 510
- US-A1- 2019 360 172
- US-A1- 2020 217 049

## Description

### TECHNICAL FIELD

The present invention relates to a work machine control system, a work machine, a work machine control method, and a work machine control program which are used for the work machine capable of detecting an object around a machine body.

### BACKGROUND ART

As a related technology, a work machine having a person detecting measure that detects a person within a given range around a work machine (excavator) is known (see, for example, Patent Document 1). A work machine control system according to the related technology determines, in any of when a hydraulic circuit of the work machine is in a (hydraulic) locked state and when is in an (hydraulic) unlocked state, whether or not the person detecting measure is detecting a person or not. The locked and unlocked states are switched by operating the gate lock lever (hydraulic lock lever).

Here, in the "locked state", a shut valve provided in the hydraulic circuit shuts off the hydraulic circuit between an operation unit (operation lever) and an (hydraulic) actuator, so that an operator, even when operates the operation unit, fails to actuate the corresponding actuator. Meanwhile, in the "unlocked state", the shut valve communicates the hydraulic circuit between the operation unit and the actuator, so that the operator, when operates the operation unit, actuates the corresponding actuator. And, in the work machine according to the related technology, digging, swinging and forward/backward actions are prohibited when it is determined that the person detecting measure is detecting the person.

### PRIOR ART DOCUMENT

### PATENT DOCUMENT

Patent Document 1: Japanese Unexamined Patent Application Publication No. 2020-056300 Furthermore, patent document JP 2014 181510 A represents a relevant piece of prior art.

### SUMMARY OF INVENTION

### TECHNICAL PROBLEM

In the above related technology, operation (action) of the work machine is uniformly prohibited at the time of detecting the person, regardless of the operation state of the gate lock lever. Thus, for example, even if, while recognizing the person present around the work machine, the operator should try to work carefully, the operator fails to operate the work machine, and has to wait until the person is absent from a monitoring area, which may be annoying.

An object of the present invention is to provide a work machine control system, a work machine, a work machine control method, and a work machine control program which easily decrease an annoyance felt by an operator.

### SOLUTION TO PROBLEM

The object of the present invention is solved with the features of the appended independent claims.

### ADVANTAGEOUS EFFECTS OF INVENTION

The present invention can provide a work machine control system, a work machine, a work machine control method, and a work machine control program which easily decrease an annoyance felt by an operator.

### BRIEF DESCRIPTION OF DRAWINGS

Fig. 1 is a schematic perspective view showing an overall configuration of a work machine according to a first embodiment.
Fig. 2 is a schematic perspective view showing a hydraulic circuit and the like of the work machine according to the first embodiment.
Fig. 3 is a schematic plan view of the work machine according to the first embodiment, viewed from above, schematically showing a monitoring area and the like set around the work machine.
Fig. 4 is a schematic external view of a display device on which a display screen is displayed by a work machine control system according to the first embodiment.
Fig. 5 is a diagram showing a schematic action of the work machine control system according to the first embodiment.
Fig. 6 is a flowchart showing an action example of the work machine control system according to the first embodiment.
Fig. 7 is a diagram showing an example of a display screen displayed by the work machine control system according to the first embodiment.
Fig. 8 is a schematic view showing a hydraulic circuit and the like of the work machine according to a second embodiment.

### DESCRIPTION OF EMBODIMENTS

Embodiments of the present invention will be described below with reference to the accompanying drawings. The following embodiments each are an embodied example of the present invention, and are not intended to limit the technical scope of the present invention. which is defined by the appended claims.

### (First Embodiment)

### [1] Overall Configuration

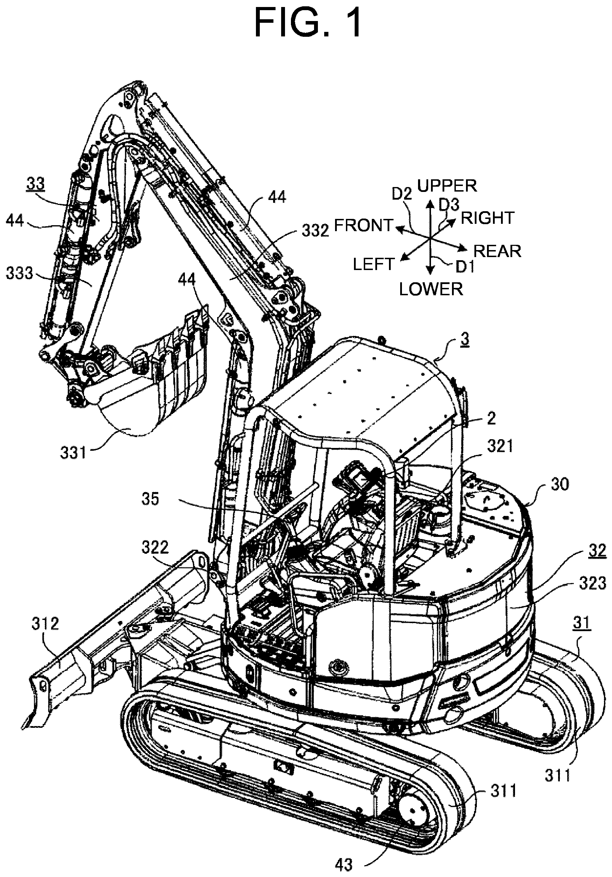

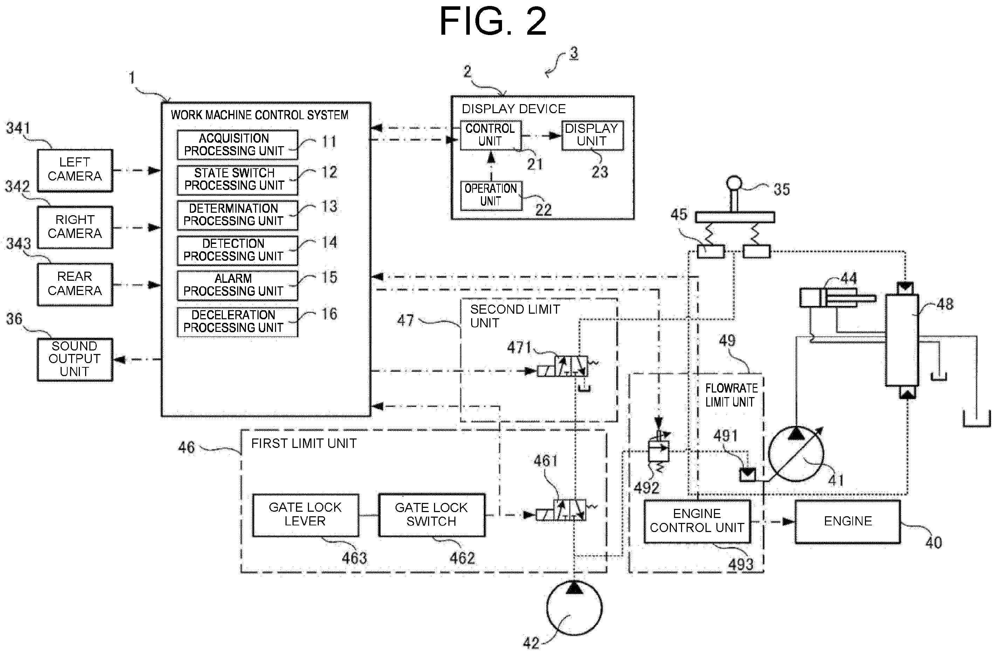

A work machine 3 according to the present embodiment has a machine body 30 provided with a run unit 31, a swing unit 32, and a work unit 33, as shown in Fig. 1. Further, the work machine 3 includes a work machine control system 1 (hereinafter, simply referred to as a "control system 1"), as shown in Fig. 2. Further, the machine body 30, as shown in Figs. 1 and 2, is provided with a display device 2, a drive unit 34, an operation unit 35 and a sound output unit 36.

The "work machine" referred to in the present disclosure means a machine for various types of work, examples thereof including work vehicles such as a backhoe (including a hydraulic excavator and a mini excavator), a wheel loader, and a carrier. The work machine 3 is provided with the work unit 33 so configured as to be capable of performing one or more types of work.

The work machine 3 is not limited to the "vehicle", and may also be, for example, a work vessel, or a flying work body such as a drone or a multi-copter. Further, the work machine 3 is not limited to a construction machine (construction equipment), and may also be an agricultural machine (agricultural equipment) such as a rice transplanter, a tractor or a combine harvester. According to the present embodiment, unless particularly specified, a case in which the work machine 3 is a riding-type backhoe and can perform excavating, land preparing, trenching, or loading work as its work will be taken as an example.

Further, according to the present embodiment, for convenience of description, a vertical direction in a state in which the work machine 3 is usable is defined as an up/down direction D1. Further, a front/rear direction D2 and a right/left direction D3 are each defined based on a direction viewed from a user (operator) riding on (a drive unit 321 of) the work machine 3 in a non-swing state of the swing unit 32. In other words, each of the directions used in the present embodiment is a direction defined based on the machine body 30 of the work machine 3, and a direction in which the machine body 30 moves at the time of the work machine 3 moving forward is referred to as "front", and a direction in which the machine body 30 moves at the time of the work machine 3 moving rearward is referred to as "rear". Similarly, a direction in which a front end portion of the machine body 30 moves at the time of the work machine 3 swinging to the right is referred to as "right", and a direction in which the front end portion of the machine body 30 moves at the time of the work machine 3 swinging to the left is referred to as "left". However, these directions are not intended to limit a use direction (a direction in use) of the work machine 3.

The work machine 3 is provided with an engine 40 (see Fig. 2) that serves as a power source. As one example in the present embodiment, the engine 40 is a diesel engine. The engine 40 is driven by a fuel (herein, a light oil) supplied from a fuel tank. In the work machine 3, the engine 40 drives a hydraulic pump 41 (refer to Fig. 2), for example, and a hydraulic oil is supplied from the hydraulic pump 41 to hydraulic actuators (including a hydraulic motor 43, a hydraulic cylinder 44, and the like) of respective portions of the machine body 30, thereby to drive the machine body 30. The above work machine 3 is controlled, for example, by the user (operator), who is riding on the drive unit 321 of the machine body 30, by operating an operation lever and the like of the operation unit 35.

In the present embodiment, it is assumed that the work machine 3 is the riding type backhoe as described above; thus, the work unit 33 is driven according to the operation by the user (operator) riding on the drive unit 321, thereby to perform the work such as excavation. The drive unit 321 on which the user rides is provided at the swing unit 32.

Here, the drive unit 321 of the machine body 30 is provided with the display device 2, the operation unit 35, and the sound output unit 36; the user can operate the operation unit 35 while viewing various types of information that is displayed on the display device 2 and that is related to the work machine 3. As an example, a display screen of the display device 2 displays information on an active state of the work machine 3, such as a cooling water temperature and a hydraulic oil temperature, so that the user can check, by the display device 2, the information that is necessary for operating the operation unit 35 and that is on the active state of the work machine 3.

The run unit 31 has a run function, and is so configured as to be capable of running (including swinging) on the ground. The run unit 31 includes a pair of right and left crawlers 311 and a blade 312, for example. The run unit 31 further includes the run-directed hydraulic motor 43 (hydraulic actuator) for driving the crawler 311.

The swing unit 32 is positioned above the run unit 31, and is so configured as to swing relative to the run unit 31 around a rotation axis along the up/down direction D1. The swing unit 32 has a swing-directed hydraulic motor (a hydraulic actuator). The swing unit 32 includes, other than the drive unit 321, the engine 40 and the hydraulic pump 41. Further, at a front end portion of the swing unit 32, there is provided a boom bracket 322 to which the work unit 33 is mounted.

The work unit 33 is so configured as to perform one or more types of work. The work unit 33 is supported to the boom bracket 322 of the swing unit 32, and performs the work. The work unit 33 has a bucket 331. The bucket 331 is a type of attachment (work instrument) that is mounted on the machine body 30 of the work machine 3, and that is composed of an optional instrument selected from among multiple types of attachments according to content of the work. The bucket 331, as an example, is removably mounted to the machine body 30, and is replaced according to the content of the work. Other than the bucket 331, the attachments for the work machine 3 include various instruments, such as a breaker, an auger, a crusher, a fork, a fork claw, a steel cutter, an asphalt cutter, a mower, a ripper, a mulcher, a tilt rotator, and a tamper.

The work unit 33 further has a boom 332, an arm 333, and a hydraulic actuator (including hydraulic cylinder 44, hydraulic motor, and the like), and the like. The bucket 331 is mounted to a tip of the arm 333.

The boom 332 is rotatably supported by the boom bracket 322 of the swing unit 32. Specifically, the boom 332 is supported by the boom bracket 322 in a mode to rotate about a rotation axis along the horizontal direction. The boom 332 is so shaped as to extend upward from a base end portion supported by the boom bracket 322. The arm 333 is coupled to a tip of the boom 332. The arm 333 is supported to the boom 332 in a mode to rotate about a rotation axis along the horizontal direction.

The work unit 33 moves under power from the engine 40 as the power source. Specifically, the engine 40 drives the hydraulic pump 41 thereby to supply the hydraulic oil from the hydraulic pump 41 to the hydraulic actuator (hydraulic cylinder 44 or the like) of the work unit 33, thereby to move portions (the bucket 331, the boom 332, and the arm 333) of the work unit 33.

According to the present embodiment the work unit 33, in particular, has an articulated configuration in which the boom 332 and the arm 333 are individually rotatable. That is, the boom 332 and the arm 333 each rotate about the rotation axis extending along the horizontal direction, so that the articulated work unit 33 including the boom 332 and the arm 333, for example, is capable of performing operations such as extending and folding as a whole.

Each of the run unit 31 and the swing unit 32, as well as the work unit 33, moves by receiving power from the engine 40 as the power source. That is, the hydraulic oil is supplied from the hydraulic pump 41 to the hydraulic motor 43 of the run unit 31, hydraulic motors of the swing unit 32, and the like, so that the swing unit 32 and the run unit 31 are moved.

The actuators (in the present embodiment, hydraulic actuators including the hydraulic motor 43 and the hydraulic cylinder 44) provided in various portions of the machine body 30 are activated in response to the operation of the operation unit 35. That is, the work machine 3 according to the present embodiment is provided with actuators that are actuated in response to the operation of the operation unit 35. Thus, the work machine 3, in response to the user (operator)'s operating the operation unit 35, performs various actions such as forward/backward action by the run unit 31, swinging by the swing unit 32, and digging work by the work unit 33.

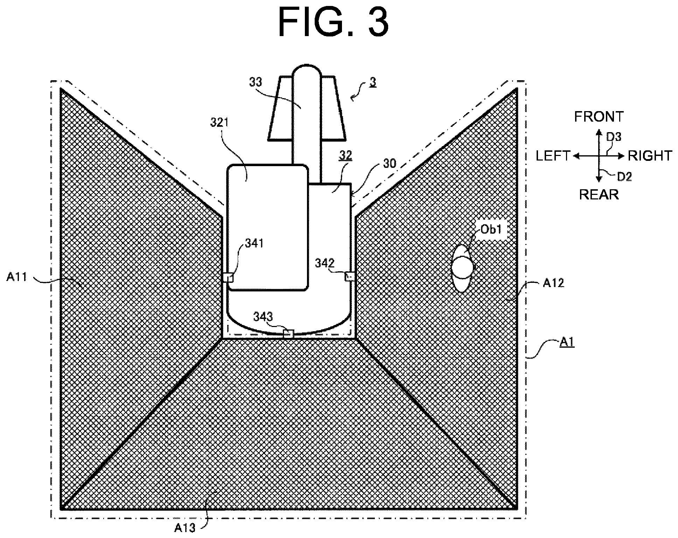

Here, the machine body 30 is provided with various sensors (including cameras) so as to detect an object Ob1 (see Fig. 3) in a monitoring area A1 (see Fig. 3) around the work machine 3, such as a camera to capture an image around the machine body 30. As one example in the present embodiment, as shown in Fig. 3, a multiplicity of cameras (herein, three), including a left camera 341, a right camera 342 and a rear camera 343, are installed on the swing unit 32 of the machine body 30. The left camera 341, the right camera 342 and the rear camera 343 are connected to the control system 1 and output, to the control system 1, an image captured by each of the cameras. Fig. 3 is a plan view of the work machine 3 viewed from above, schematically showing the monitoring area A1 set around the work machine 3, the object Ob1, and the machine body 30 (including the left camera 341, the right camera 342 and the rear camera 343) of the work machine 3.

The left camera 341, the right camera 342, and the rear camera 343 are placed to face left, right, and rear, respectively, based on the drive unit 321, so as to capture images of the monitoring area A1 on left, right, and rear viewed from the operator riding on the drive unit 321 of the swing unit 32. That is, as shown in Fig. 3, the monitoring area A1 includes a multiplicity (here, three) of small areas A11, A12, and A13, and the left camera 341 captures an image of the small area A11 (left area) which is on the left as seen from the operator riding on the drive unit 321. Similarly, the right camera 342 captures an image of the small area A12 (right area) which is on the right as seen from the operator riding on the drive unit 321, and the rear camera 343 captures an image of the small area A13 (rear area) which is in the rear as seen from the operator riding on the drive unit 321. This enables the left camera 341, the right camera 342, and the rear camera 343 to cover the both sides (left and right) and the rear which are often blind spots for the operator.

Fig. 2 schematically shows a hydraulic circuit and electric circuit (electric connection) of the work machine 3 according to the present embodiment. In Fig. 2, a solid line shows a high-pressure oil path (for hydraulic oil), a dotted line shows a low-pressure oil path (for pilot oil), and a dashed-dotted line arrow shows an electric signal path.

As shown in Fig. 2, the work machine 3 has the hydraulic pump 41, the hydraulic motor 43 (omitted from Fig. 2) and the hydraulic cylinder 44, as well as a pilot pump 42, a remote control valve 45, a first limit unit 46, a second limit unit 47, a direction switch valve (control valve) 48, a flowrate limit unit 49, and the like.

The hydraulic oil from the hydraulic pump 41 driven by the engine 40 is supplied to the hydraulic motor 43 of the run unit 31, the hydraulic motor of the swing unit 32, the hydraulic cylinder 44 of the work unit 33, and the like.

This drives the hydraulic actuators such as the hydraulic motor 43 and the hydraulic cylinder 44.

Here, the flowrate of the hydraulic oil supplied from the hydraulic pump 41 is not fixed, and can be changed (variable) by a proper measure. The work machine 3 according to the present embodiment is provided with the flowrate limit unit 49, making it possible to adjust the flowrate of the hydraulic fluid by the flowrate limit unit 49. As one example in the present embodiment, the hydraulic pump 41 includes a variable displacement pump that can change the hydraulic oil flowrate discharged per revolution of a drive shaft.

The flowrate limit unit 49 has a control signal input port 491, a solenoid proportional valve 492, and an engine control unit 493. The control signal input port 491 is a port where a control signal is input so as to adjust the discharge rate (flowrate) of the hydraulic oil of the hydraulic pump 41 composed of the variable displacement type pump. Specifically, a pilot oil which serves as the control signal is supplied from the pilot pump 42 to the control signal input port 491, and the hydraulic oil discharge rate of the hydraulic pump 41 changes according to the supply rate (pilot pressure) of the pilot oil. The solenoid proportional valve 492 is a solenoid proportional control valve provided on the pilot oil's supply path to the control signal input port 491, and adjusts the pilot pressure input to the control signal input port 491. The solenoid proportional valve 492 is connected to the control system 1, and according to the control signal (supply current) from the control system 1, adjusts the pilot pressure input to the control signal input port 491, thereby to change the hydraulic oil discharge rate of the hydraulic pump 41. The engine control unit 493 controls the speed of the engine 40. That is, the engine control unit 493 controls the speed of the hydraulic pump 41, thereby to change the hydraulic oil discharge rate of the hydraulic pump 41.

Thus, the flowrate limit unit 49 controls at least one of the flowrate of the hydraulic pump 41 that supplies the hydraulic oil, the speed of the engine 40 that drives the hydraulic pump 41, and the pilot pressure, thereby making it possible to adjust the flowrate of the hydraulic oil discharged from the hydraulic pump 41. The flowrate limit unit 49 may, without steps, continuously vary the flowrate of the hydraulic fluid discharged from the hydraulic pump 41, or may vary the flowrate at steps (for example, 2, 5, or 10 steps).

Each of the hydraulic actuators, such as the hydraulic motor 43 and the hydraulic cylinder 44, includes a pilot-type direction switch valve 48 capable of switching a direction and flowrate of the hydraulic oil from the hydraulic pump 41. The direction switch valve 48 is driven when the pilot oil serving as an input instruction is supplied from the pilot pump 42.

Here, the remote control valve 45 is provided, for example, in the pilot oil's supply path to the direction switch valve 48 that corresponds to the hydraulic cylinder 44 of the work unit 33. The remote control valve 45 outputs a work operation instruction of the work unit 33 according to the operation of the operation unit 35 (operation lever). The work operation instruction instructs an expanding operation, a contracting operation and the like of the work unit 33. Further, the flowrate of the pilot oil supplied from the pilot pump 42 to the remote control valve 45 is adjustable by the first limit unit 46 and the second limit unit 47. The first limit unit 46 has a first control valve 461, a gate lock switch 462, and a gate lock lever 463. The second limit unit 47 has a second control valve 471.

Further, the first control valve 461 and the second control valve 471 are each an electromagnetic control valve (solenoid valve), and are inserted in series to between the remote control valve 45 and the pilot pump 42. The first control valve 461 is connected via the gate lock switch 462 to the power source, and operates according to the current supplied from the power source. The second control valve 471 is connected to the control system 1, and operates according to the control signal (supply current) from the control system 1. The first control valve 461 and the second control valve 471, here, are each assumed to be a (electromagnetic) proportional control valve, but can also be a switchable open/close valve that opens/shuts off the flow path, for example.

The first control valve 461 and the second control valve 471 each in an energized state, that is, when the current as the control signal is supplied, open the flow path of the pilot oil, and in a de-energized state, that is, when the current as the control signal is shut off, shut off the flow path of the pilot oil. Thus, shutting off the supply current (control signal) to at least one of the first control valve 461 and the second control valve 471 disables the hydraulic actuator (such as hydraulic cylinder 44) that corresponds to the remote control valve 45, thus forcibly stopping the hydraulic actuator regardless of the operation of the operation unit 35.

Similarly, a remote control valve is also provided in the pilot oil's supply path to a direction switch valve that corresponds to the hydraulic motor 43 of the run unit 31. This remote control valve outputs a run operation instruction of the run unit 31 according to the operation of the operation unit 35 (operation lever). The run operation instruction instructs a run action (for example, forward or backward) of the run unit 31. Further, a remote control valve is also provided in the pilot oil's supply path to a direction switch valve that corresponds to the hydraulic motor of the swing unit 32. This remote control valve outputs a swing operation instruction of the swing unit 32 according to the operation of the operation unit 35 (operation lever). The swing operation instruction instructs a swing action (for example, left swing or right swing) of the swing unit 32. And, to between these remote control valves and the pilot pump 42, the first control valve 461 and the second control valve 471 are inserted.

The gate lock switch 462 is interlocked with the gate lock lever 463. The gate lock lever 463 is placed at the drive unit 321 of the machine body 30, and receives an operation input by the user (operator). As one example in the present embodiment, the gate lock lever 463 is operable along the up/down direction D1. When the gate lock lever 463 is in "up position" which is the upper end position of the movable range, the gate lock switch 462 is "off"; when the gate lock lever 463 is in "down position" which is the lower end position of the movable range, the gate lock switch 462 is "on". Then, the gate lock switch 462 is connected to the control system 1, and on/off of the gate lock switch 462 is monitored by the control system 1.

Thus, when the gate lock lever 463 is in "down position", the first control valve 461 is brought in the energized state, driving the hydraulic actuator (hydraulic cylinder 44 and the like) by the operation of the operation unit 35. In contrast, when the gate lock lever 463 is in the "up position", the first control valve 461 is brought in the de-energized state, forcibly stopping the hydraulic actuator not depending on the operation of the operation unit 35. Thus, for driving the hydraulic actuator (such as hydraulic cylinder 44), the user (operator) needs to operate the gate lock lever 463 to "down position".

Further, each of the swing unit 32 and the run unit 31 moves with the hydraulic oil supplied from the hydraulic pump 41 to the hydraulic actuator (hydraulic motor 43 and the like); thus, when the gate lock lever 463 is in the "up position", the swing unit 32 and the run unit 31 also become disabled. That is, when the gate lock lever 463 is in the "up position", all of the work unit 33, the swing unit 32, and the run unit 31 are forcibly disabled.

In short, the gate lock switch 462, when being off, is in a "locked state" in which the action of the work machine 3 is limited (including prohibited), and when being on, is in an "unlocked state" in which the action of the work machine 3 is not limited. Then, when the gate lock lever 463 is in "up position" and the gate lock switch 462 is locked (off), the action of the work machine 3 is forcibly limited not depending on the operation of the operation unit 35. The gate lock lever 463 is the lever that is operated for locking the action of the work machine 3, and is synonymous with a cutoff lever.

The operation unit 35 is placed at the drive unit 321 of the machine body 30, and is a user interface for receiving the operation input by the user (operator). The operation unit 35 outputs an electric signal (operation signal) that accords to the operation by the user, for example, thereby to receive various operations by the user.

The sound output unit 36 outputs a sound (including voice) to the user (operator). The sound output unit 36 includes a buzzer or a speaker, and outputs the sound upon receiving the electric signal. The sound output unit 36 is connected to the control system 1, and outputs the sound, such as a beep or a voice, according to a sound control signal from the control system 1. In the present embodiment, the sound output unit 36, as well as the display device 2, is provided in the drive unit 321 of the machine body 30. The sound output unit 36 may be provided integrally with the display device 2.

The control system 1 is mainly configured by a computer system having one or more processors such as a CPU (Central Processing Unit), and one or more memories such as a ROM (Read Only Memory) and a RAM (Random Access Memory), executing various processes (information process). According to the present embodiment, the control system 1 is an integrated control unit that controls the overall work machine 3, and includes, for example, an electronic control unit (ECU).

However, the control system 1 may be provided separate from the integrated control unit, and may be primarily composed of one or more processors. The control system 1 is to be described in detail in the column "[2] Configuration of Control System".

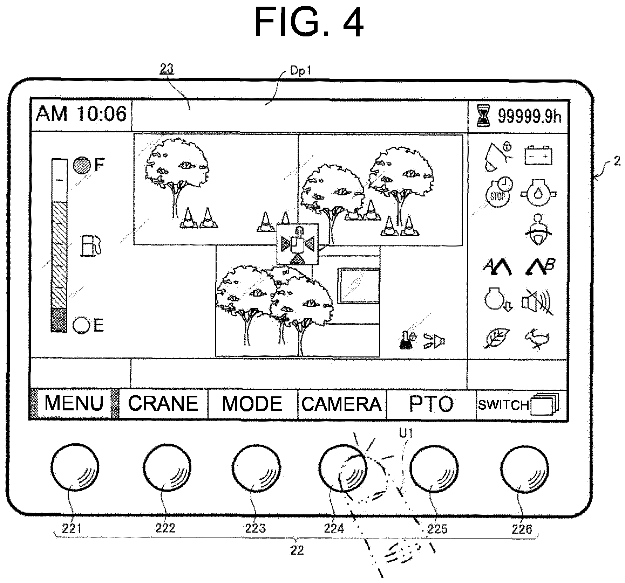

The display device 2 is placed at the drive unit 321 of the machine body 30, and is a user interface for receiving the operation input by the user (operator) and thereby for outputting various types of information to the user. The display device 2 outputs an electric signal that accords to the operation by the user, for example, thereby to receive various operations by the user. With this, the user (operator) can view a display screen Dp1 (refer to Fig. 4) displayed on the display device 2, and also can operate the display device 2 as necessary.

As shown in Fig. 2, the display device 2 includes a control unit 21, an operation unit 22, and a display unit 23. The display device 2 is so configured as to be communicable with the control system 1, and can execute sending and receiving of data to and from the control system 1. As one example in the present embodiment, the display device 2 is a dedicated device used for the work machine 3.

The control unit 21 controls the display device 2 according to the data from the control system 1. Specifically, the control unit 21 outputs the electric signal that accords to the user's operation received by the operation unit 22, and displays, on the display unit 23, the display screen Dp1 generated by the control system 1.

The operation unit 22 is a user interface for receiving the user (operator)'s input operation to the display screen Dp1 displayed on the display unit 23. The operation unit 22 outputs the electric signal that accords to an operation of a user U1 (refer to Fig. 4), for example, thereby to receive various operations by the user U1. As one example in the present embodiment, the operation unit 22 includes multiple (herein six) mechanical push button switches 221 to 226, as shown in Fig. 4. Along a periphery of a display area of the display unit 23, the multiple push button switches 221 to 226 are placed in the vicinity of the display area (a lower portion in the example in Fig. 4). The multiple push button switches 221 to 226 are associated with after-described items displayed on the display screen Dp1; operating any of the multiple push button switches 221 to 226 operates (selects) any of the items on the display screen Dp1.

Further, the operation unit 22 may include a touch screen and an operation dial. In this case as well, it is deemed that operating the operation unit 22 operates (selects) any of the items on the display screen Dp1.

The display unit 23 is a user interface, which is for presenting information to the user U1 (operator), such as a liquid crystal display or organic EL display that displays various types of information. The display unit 23, by display, presents various types of information to the user. As one example in the present embodiment, the display unit 23 is a full-color liquid crystal display with a backlight, and has a "horizontally-long" display area that is long in a horizontal direction, as shown in Fig. 4.

Further, the machine body 30 is provided with a communication terminal, a fuel tank, a battery, and the like, in addition to the above configuration. Further, the machine body 30 is provided with various sensors (including cameras) for detecting a to-be-detected object in a monitoring area around the work machine 3, examples of sensors including a camera for capturing an image around the machine body 30.

### [2] Configuration of Control System

Next, a configuration of the control system 1 according to the present embodiment will be described with reference to Fig. 2. The control system 1 controls each portion of the machine body 30 (including the run unit 31, the swing unit 32, and the work unit 33). According to the present embodiment, the control system 1 is a component of the work machine 3, constituting the work machine 3 together with the machine body 30 and the like. In other words, the work machine 3 according to the present embodiment is provided with at least the control system 1 and the machine body 30.

As shown in Fig. 2, the control system 1 is provided with an acquisition processing unit 11, a state switch processing unit 12, a determination processing unit 13, a detection processing unit 14, an alarm processing unit 15, and a deceleration processing unit 16. As one example in the present embodiment, the control system 1 is mainly composed of a computer system having one or more processors; thus, the one or more processors, by executing a work machine control program, realize the above multiple functional units (acquisition processing unit 11 and the like). The multiple functional units included in the control system 1 may be distributed to multiple cases, or may be included in a single case.

The control system 1 is so configured as to be communicable with a device provided at each unit of the machine body 30. This means that, to the control system 1, at least the display device 2, the left camera 341, the right camera 342, the rear camera 343, the sound output unit 36, the gate lock switch 462, the second control valve 471, the solenoid proportional valve 492, the engine control unit 493 and the like are connected. This causes the control system 1 to control the display device 2, the sound output unit 36 and the like, and to acquire the images captured by the left camera 341, the right camera 342, the rear camera 343 and the like. Here, the control system 1 may send and receive various types of information (data) directly to and from each device, or indirectly through a relay or the like. The control system 1 can communicate with the device provided at each portion of the machine body 30, by using, as an example, a communication method such as a Controller Area Network (CAN) or the like.

The acquisition processing unit 11 executes the acquisition process to acquire the detection result of the object Ob1 around the machine body 30 of the work machine 3. Specifically, according to the present embodiment, the object Ob1 around the machine body 30 is detected by the detection processing unit 14 based on output of the left camera 341, right camera 342, and rear camera 343. Thus, from the detection processing unit 14, the acquisition processing unit 11 acquires the detection result of the object Ob1 around the machine body 30. As one example in the present embodiment, the object Ob1 is a "person". That is, when the "person" enters the monitoring area A1 around the work machine 3 as a result of the work machine 3 having moved or the "person" around the work machine 3 having moved, the detection processing unit 14 detects the "person" as the object Ob1. When multiple objects Ob1 are present in the monitoring area A1, the detection processing unit 14 may perform the detection including the number of objects Ob1 (the number of persons).

That is, regardless of whether the gate lock lever 463 is in "up position" or "down position", the acquisition processing unit 11, from the detection processing unit 14, regularly or irregularly acquires the detection result of the object Ob1 around the machine body 30.

The determination processing unit 13 executes a determining process to determine whether "the work machine 3 is inoperable" or "the work machine 3 is operable". Here, "the work machine 3 is inoperable" means a state in which the work machine 3 is not driven by the operation of the operation unit 35, and includes at least the state in which the gate lock lever 463 is in "up position" and the gate lock switch 462 is off. Further, "the work machine 3 is inoperable" includes, for example, a state in which an ignition of the work machine 3 is off (that is, the engine 40 is stopped), and a state in which the main power source of the work machine 3 is off. Conversely, "the work machine 3 is operable" means a state in which the work machine 3 is driven by the operation of the operation unit 35, and includes at least a state in which the gate lock lever 463 is in "down position" and the gate lock switch 462 is on. Further, "the work machine 3 is operable" includes, for example, a state in which the ignition of the work machine 3 is on (that is, the engine 40 is driving), and the main power source of the work machine 3 is on.

In the present embodiment, the "locked state" is defined as the gate lock lever 463's state seen when the gate lock lever 463 is in the "up position", i.e., "the work machine 3 is inoperable". Meanwhile, the "unlocked state" is defined as the gate lock lever 463's state seen when the gate lock lever 463 is in the "down position", i.e., "the work machine 3 is operable".

The determination processing unit 13 determines, based on at least the input signal from the gate lock switch 462, whether the gate lock lever 463 is in "up position" or "down position". As one example in the present embodiment, "the work machine 3 is inoperable" is defined as a state in which the gate lock lever 463 is in the "up position" (that is, the locked state), or in which the ignition is off.

Meanwhile, "the work machine 3 is operable" is defined as a state in which the gate lock lever 463 is in the "down position" (that is, the unlocked state), and in which the ignition is on. That is, when the gate lock switch 462 is off, the determination processing unit 13 determines that the gate lock lever 463 is in "up position", i.e., "the work machine 3 is inoperable". Further, when the ignition of the work machine 3 is off, the determination processing unit 13 uniformly determines that "the work machine 3 is inoperable" regardless of the state of the gate lock lever 463. In short, in the present embodiment, the determination processing unit 13 determines that the work machine 3 is inoperable when the gate lock lever 463 is locked or the ignition is off, and determines that the work machine 3 is operable when the gate lock lever 463 is unlocked and the ignition is on.

According to the invention, the determination processing unit 13 also determines whether or not a given condition is met with respect to the detection result of the object Ob1 around the machine body 30. That is, the determination processing unit 13 determines whether or not the detection result acquired by the acquisition processing unit 11 from the detection processing unit 14 meets the given condition.

The "given condition" here is a condition imposed on the detection result in order to perform an alarm's outputting (execute an alarm process), and includes, for example, the object Ob1 being present in the monitoring area A1 around the machine body 30. The "given condition" may include, for example, in addition to or in place of the object Ob1 being present in the monitoring area A1, the object Ob1's having a specific attribute, the object Ob1's being present in the monitoring area A1 for a given time period or more, a specific position around the machine body 30 (for example, a position in the operator's blind spot, or a position within a certain distance from the machine body 30), or the like. The "specific attribute" here includes, as an example, that the object Ob1 is operating, that the object Ob1 is a non-worker (a general person), that the object Ob1 (here, "person") is unaware of the presence of the machine body 30 by turning its back to the machine body 30, or that the given number of objects Ob1 are present. According to the invention, the "given condition" is the object Ob1 (in this case, "person") being present in the monitoring area A1.

Further, according to the invention, the determination processing unit 13 also determines whether the work machine 3 is in a standby state or an action state. The "standby state" here means a state in which at least the control system 1 and the engine 40 are in action, and the operation unit 35 is not operated. When the operation unit 35 includes an operation lever, the state in which the user (operator) does not operate the operation lever and the operation lever is in the neutral position is defined as the state in which the operation unit 35 is not operated. When the work machine 3 is in the standby state, each unit (run unit 31, swing unit 32, and work unit 33) of the machine body 30, although not in action, is ready for operation in response to the operation of the operation unit 35. The "action state" means that at least the control system 1 and engine 40 are in action, and the operation unit 35 is operated. When the operation unit 35 includes the operation lever, the state in which the user (operator), by operating the operation lever, puts the operation lever in a position other than the neutral position is defined as the state in which the operation unit 35 is operated. When the work machine 3 is in the action state, any of the units (run unit 31, swing unit 32 or work unit 33) of the machine body 30 is in action.

According to the invention, the determination processing unit 13, based at least on the operation state of the operation unit 35 operated by the user (operator), determines whether the work machine 3 is in the standby state or the action state. In short, the determination processing unit 13, based on the operation state of the operation unit 35 operated by the user, determines the standby state and action state of the work machine 3. Basically, the determination processing unit 13 determines that the work machine 3 is in the standby state when the operation unit 35 is not operated, such as the operation lever being in the neutral position, and determines that the work machine 3 is in the action state when the operation unit 35 is operated, such as the operation lever being in the position other than the neutral position. In this way, determining the standby and action states of the work machine 3 based on the operation state of the operation unit 35 facilitates a process related to the determination of whether the standby state or the action state.

As an example, to the operation unit 35, an operation pressure sensor is attached to detect the operation content of the user (operator) using the operation unit 35. The operation pressure sensor detects, in the form of pressure, the operation direction and operation amount of the operation lever (or operation pedal), which corresponds to each of the actuators and which is of the operation unit 35, for example, and outputs a detection value to the control system 1. The determination processing unit 13 of the control system 1 determines the standby state and action state of the work machine 3, based on the operation pressure sensor's detection value representing the operation state of the operation unit 35.

However, the time period from the stop of operation of the operation unit 35 until a specific time period (e.g., several seconds) elapses may be excluded from the standby state. That is, it may be so made that, until the specific time period has elapsed after the stop of the operation of the operation unit 35, it is not determined to be in the standby state even when the operation unit 35 is not operated. Or, the determination processing unit 13 may determine the standby state and action state of the work machine 3, in response to the operation unit 35's operation amount, for example, the operation lever's movement angle from the neutral position of the operation lever. In this case, it is preferable that the determination processing unit 13 determines, when the operation unit 35's operation amount is less than a threshold value, that the work machine 3 is in the standby state, and determines, when the operation unit 35's operation amount is greater than the threshold value, that the work machine 3 is in the action state.

Further, the determination processing unit 13 outputs the determination result to at least the state switch processing unit 12. That is, to the state switch processing unit 12, the determination processing unit 13 inputs the determination result (also referred to as a first determination result) as to whether "the work machine 3 is inoperable" or "the work machine 3 is operable", the determination result (also referred to as a second determination result) as to whether the detection result meets the given condition, and the determination result (also referred to as a third determination result) as to whether the work machine 3 is in the standby state or the action state.

The detection processing unit 14 detects the object Ob1 in the monitoring area A1 around the machine body 30. That is, the detection processing unit 14 detects whether or not the object Ob1 is present in the monitoring area A1, and outputs the detection result showing whether or not the object Ob1 is present in the monitoring area A1. Specifically, in the present embodiment, the detection processing unit 14 regularly or irregularly acquires outputs of the left camera 341, the right camera 342 and the rear camera 343 from the left camera 341, the right camera 342 and the rear camera 343. That is, the detection processing unit 14 acquires the image data of the monitoring area A1 (each of small areas A11, A12, A13) around the work machine 3. The data acquired by the detection processing unit 14 is stored in a memory, for example. Then, the detection processing unit 14 detects the object Ob1 in the monitoring area A1, based on the outputs (image data) of the left camera 341, the right camera 342 and the rear camera 343.

Specifically, the detection processing unit 14 applies an image process to the acquired image data thereby to extract a feature quantity in the image, and based on the feature quantity, determines whether or not the object Ob1 ("person" according to the present embodiment) is reflected in the image. Here, when the object Ob1 is reflected in the image, the detection processing unit 14 determines the object Ob1 is reflected in the image captured by which of the left camera 341, the right camera 342 and the rear camera 343. That is, the detection processing unit 14 distinguishes that the object Ob1 is present in which of the small area A11 imaged by the left camera 341, the small area A12 imaged by the right camera 342, and the small area A13 imaged by the rear camera 343, thereby to detect the object Ob1.

The alarm processing unit 15 performs the alarm's outputting, that is, performs a reporting. The alarm processing unit 15 performs the alarm process that performs the alarm's outputting (reporting) which is based on the detection result of the detection processing unit 14, i.e., the detection result of the object Ob1 in the monitoring area A1 around the machine body 30. The "reporting" as used in the present disclosure means outputting the alarm to the user (operator) by various measures, including, for example, sound (including voice), display (including lighting of display light), sending to another terminal, or writing in a non-transient recording medium. However, the alarm processing unit 15 basically provides the reporting in a mode that causes the user (operator) to recognize the alarm in real time. As one example in the present embodiment, the alarm processing unit 15, when the object Ob1 is present in the monitoring area A1 around the machine body 30, causes the display unit 23 of the display device 2 to show a display to that effect, and causes the sound output unit 36 to output an alarm sound. The alarm sound may be a simple beep, or a voice such as a message "Please be careful". Further, the alarm content (display content and alarm sound) may vary according to the detection result (position of the object Ob1, distance from the machine body 30 to the object Ob1, and the like) of the detection processing unit 14.

The deceleration processing unit 16 executes a decelerating process that automatically controls the speed of the engine 40. For example, when the work unit 33, etc. is not in action and the engine 40's output is not required for a certain time period, the deceleration processing unit 16 outputs a control signal to the engine control unit 493 thereby to reduce the speed of the engine 40. That is, the deceleration processing unit 16 has an auto-deceleration function, and automatically controls the speed of the engine 40.

Specifically, the deceleration processing unit 16 controls the speed of the engine 40 in response to the operation state of the operation unit 35 operated by the user; if the operation unit 35 remains inoperable for the specific time period, the deceleration processing unit 16 switches the speed of the engine 40 to a low idle speed lower than the given value. Meanwhile, if the operation unit 35 is operated, the deceleration processing unit 16 switches the speed of the engine 40 to a high idle speed (> low idle speed) higher than the given value. That is, the deceleration processing unit 16, when the work machine 3 is in the standby state, controls the speed of the engine 40 of the work machine 3 to be lower than the given value, and, when the work machine 3 is in the action state, controls the speed of the engine 40 to be higher than the given value. However, the deceleration processing unit 16 may control the speed of the engine 40 in response to the third determination result of the determination processing unit 13, that is, whether the work machine 3 is in the standby state or the action state. This allows the speed of the engine 40 to be suppressed low in the standby state in which the engine 40's output is not required, thereby making it possible to reduce the noise and vibration caused by the engine 40 and suppress fuel consumption by the engine 40.

The state switch processing unit 12, apart from the gate lock lever 463, executes a state switch process that switches the operation unit 35 between enabled and disabled states. In short, in the present invention; although even the gate lock lever 463 can switch between the enabled and disabled states of the operation unit 35, the state switch processing unit 12, regardless of the operation of the gate lock lever 463, switches between the enabled and disabled states of the operation unit 35.

"The operation unit 35 is enabled" here means a state in which the operation unit 35 is enabled, that is, the work machine 3 is driven by the operation of the operation unit 35, and is synonymous with "the work machine 3 is operable". Further, "the operation unit 35 is disabled" means a state in which the operation unit 35 is disabled, that is, the work machine 3 is not driven by the operation of the operation unit 35, and is synonymous with "the work machine 3 is inoperable".

The gate lock lever 463 can switch between the "unlocked state" in which the work machine 3 is operable, and the "locked state " in which (the work machine 3) is inoperable. Then, when "the work machine 3 is inoperable", the actuators (hydraulic actuators including the hydraulic motor 43 and the hydraulic cylinder 44 in the present embodiment) are forcibly stopped regardless of the operation of the operation unit 35. That is, when the gate lock lever 463 is in the "locked position", all of the work unit 33, the swing unit 32, and the run unit 31 are forcibly disabled, thus putting the operation unit 35 in the "disabled state". Meanwhile, when "the work machine 3 is operable", the actuators are activated in response to the operation of the operation unit 35. That is, when the gate lock lever 463 is in the "unlocked state", all of the work unit 33, the swing unit 32 and the run unit 31 are enabled in response to the operation of the operation unit 35, thus putting the operation unit 35 in the "enabled state".

The state switch processing unit 12 is thus so configured, apart from the gate lock lever 463 which can switch between the unlocked state in which the work machine 3 is operable and the locked state in which the work machine 3 is inoperable, as to switch between the enabled and disabled states of the operation unit 35. Specifically, the state switch processing unit 12 controls the second control valve 471 of the second limit unit 47, thereby to switch the operation unit 35 between the enabled and disabled states. For example, the state switch processing unit 12 puts the second control valve 471 of the second limit unit 47 in the shut-off state, thereby to put the operation unit 35 in the disabled state. Meanwhile, the state switch processing unit 12 puts the second control valve 471 of the second limit unit 47 in an open state, thereby to put the operation unit 35 in the enabled state.

Here, on the flow path of the pilot oil supplied from the pilot pump 42 to the remote control valve 45, the second control valve 471 of the second limit unit 47 is inserted in series with the first control valve 461 which is linked to the gate lock lever 463. Thus, "the work machine 3 is operable" is limited to when both the first control valve 461 and the second control valve 471 are in the open state; if at least one of the first control valve 461 and the second control valve 471 is in the shut-off state, "the work machine 3 is inoperable". In other words, when the state switch processing unit 12 puts the operation unit 35 in the enabled state, "the work machine 3 is operable" is seen only when the gate lock lever 463 is in the unlocked state, whereas "the work machine 3 is inoperable" is seen when the gate lock lever 463 is in the locked state. Meanwhile, when the state switch processing unit 12 puts the operation unit 35 in the disabled state, "the work machine 3 is inoperable" is seen regardless of whether the gate lock lever 463 is in the locked or unlocked state.

By the way, the state switch processing unit 12, in the standby state of the work machine 3, when the gate lock lever 463 is in the unlocked state and the detection result (of the detection processing unit 14) meets the given condition, puts the operation unit 35 in the enabled state. That is, when the third determination result of the determination processing unit 13 is in the "standby state", if the first determination result showing "unlocked state" (that is, "the work machine 3 is operable") is acquired and the second determination result showing that the detection result meets the given condition is acquired, the state switch processing unit 12 puts the operation unit 35 in the "enabled state". Thus, if the object Ob1 (person) enters the monitoring area A1 when the work machine 3 is in the standby state and the gate lock lever 463 is in the "down position" (unlocked), the state switch processing unit 12 puts the operation unit 35 in the "enabled state". This causes "the work machine 3 is operable", and the actuator is actuated in response to the operation of the operation unit 35.

Further, the state switch processing unit 12, in the action state of the work machine 3, when the gate lock lever 463 is in the unlocked state and the detection result (of the detection processing unit 14) meets the given condition, puts the operation unit 35 in the disabled state. That is, when the third determination result of the determination processing unit 13 is in the "action state", if the first determination result showing the "unlocked state" (that is, "the work machine 3 is operable") is acquired and the second determination result showing that the detection result meets the given condition is acquired, the state switch processing unit 12 puts the operation unit 35 in the "disabled state". Thus, if the object Ob1 (person) enters the monitoring area A1 when the work machine 3 is in the action state and the gate lock lever 463 is in the "down position" (unlocked), the state switch processing unit 12 puts the operation unit 35 in the "disabled state". This causes "the work machine 3 is inoperable", and the actuator is forcibly stopped regardless of the operation of the operation unit 35.

As described above, the state switch processing unit 12, when the given disenabling condition is met, switches the operation unit 35 to the disabled state. Here, the disenabling condition includes that, in the action state of the work machine 3, the gate lock lever 463 is in the unlocked state and the detection result meets the given condition. In this case, even when the gate lock lever 463 is in the unlocked state, the operation unit 35 is switched to the disabled state, causing "the work machine 3 is inoperable". Also, the state switch processing unit 12, after switching the operation unit 35 to the disabled state, switches the operation unit 35 to the enabled state when the given enabling condition is met. Here, the enabling condition includes that, in the action state of the work machine 3, the gate lock lever 463 is in the unlocked state and the detection result meets the given condition. When the gate lock lever 463 is in the locked state, however, even the state switch processing unit 12, by switching the operation unit 35 to the enabled state, fails to cause "the work machine 3 is operable", instead causes "the work machine 3 is inoperable".

The disenabling condition is not limited to the conditions described above, but may include, for example, the user (operator) getting up from the seat of the drive unit 321, unbuckling the seatbelt, or the standby state continuing for a given time period, in addition to or instead of the detection result meeting the given condition. The state switch processing unit 12 may switch the operation unit 35 to the disabled state when at least one of these disenabling conditions is met, or may switch the operation unit 35 to the disabled state when all of given combinations of these disenabling conditions is met.

The enabling condition is not limited to the conditions described above, but may include, for example, the user (operator) sitting in the seat of the drive unit 321, wearing the seat belt, or the gate lock lever 463 being operated from the locked state to the unlocked state, in addition to or instead of the detection result meeting the given condition. The state switch processing unit 12 may switch the operation unit 35 to the enabled state when at least one of these enabling conditions is met, or may switch the operation unit 35 to the enabled state when all of given combinations of these enabling conditions is met.

### [3] Work machine control method

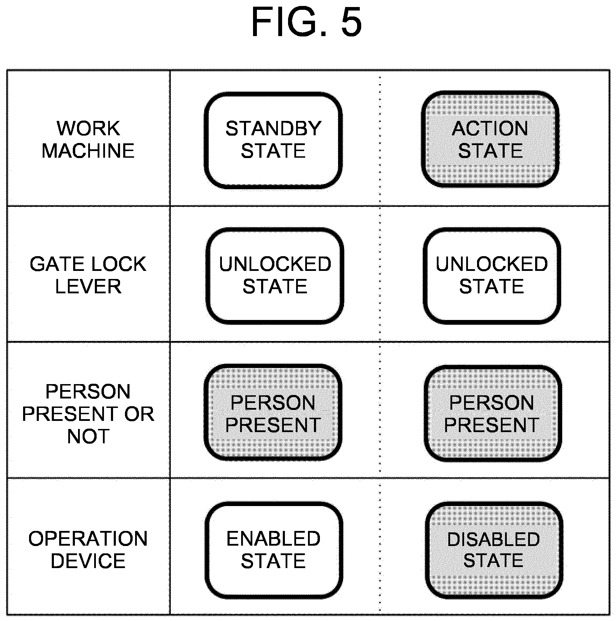

Hereinafter, an example of a work machine 3's control method (hereinafter, simply referred to as a "control method") executed mainly by the control system 1 will be described with reference to Fig. 5 to Fig. 7.

The control method according to the present embodiment is executed by the control system 1 mainly composed of the computer system, and thus, in other words, is embodied by a work machine control program (hereinafter, simply referred to as "control program"). That is, the control program according to the present embodiment is a computer program that causes one or more processors to execute each of processes related to the control method. The above control program may be cooperatively executed by, for example, the control system 1 and the display device 2.

Here, when a preset specific start operation for executing the control program is performed, the control system 1 executes the following various types of processes related to the control method. The start operation is, for example, a startup operation (ignition on) of the engine 40 of the work machine 3. Meanwhile, when a preset specific end operation is performed, the control system 1 ends the various types of processes related to the control method. The end operation is, for example, a stop operation (ignition off) of the engine 40 of the work machine 3.

### Schematic Action

Here, first, the control method according to the present embodiment, that is, a general action of the state switch processing unit 12 of the control system 1 according to the present embodiment will be described, with reference to Fig. 5. As shown in Fig. 5, focusing on two items, that is, the gate lock lever 463 and person present or not, it is obvious that the action of the state switch processing unit 12 differs between the standby and action states. Here, "Gate lock lever" includes two states: "unlocked" and "locked". The "Person present or not" includes two states: "the detection result meets the given condition" (person present) and "the detection result fails to meet the given condition" (person not present").

That is, when the gate lock lever 463 is in the unlocked state (down position), and the detection result meets a given state due to the object Ob1 being present in the monitoring area A1 around the machine body 30, the state switch processing unit 12 enables the operation unit 35 if the work machine 3 is in the standby state. This causes "the work machine 3 is operable", and the actuator is actuated in response to the operation of the operation unit 35. Meanwhile, even when the gate lock lever 463 is in the unlocked state (down position), and the detection result meets the given state due to the object Ob1 being present in the monitoring area A1 around the machine body 30, the state switch processing unit 12 puts the operation unit 35 in the disabled state if the work machine 3 is in the action state. This causes "the work machine 3 is inoperable", and the actuator is forcibly stopped regardless of the operation of the operation unit 35.

In short, the control method of the present embodiment has acquiring the detection result of the object Ob1 around the machine body 30 of the work machine 3, and switching the operation unit 35 between the enabled and disabled states, apart from the gate lock lever 463 that can switch between the unlocked state in which the work machine 3 is operable and the locked state in which the work machine 3 is inoperable. Then, when the work machine 3 is in the standby state, the control method, if the gate lock lever 463 is in the unlocked state and the detection result meets the given condition, puts the operation unit 35 in the enabled state. Meanwhile, when the work machine 3 is in the action state, the control method, if the gate lock lever 463 is in the unlocked state and the detection result meets the given condition, puts the operation unit 35 in the disabled state.

### Specific Operation

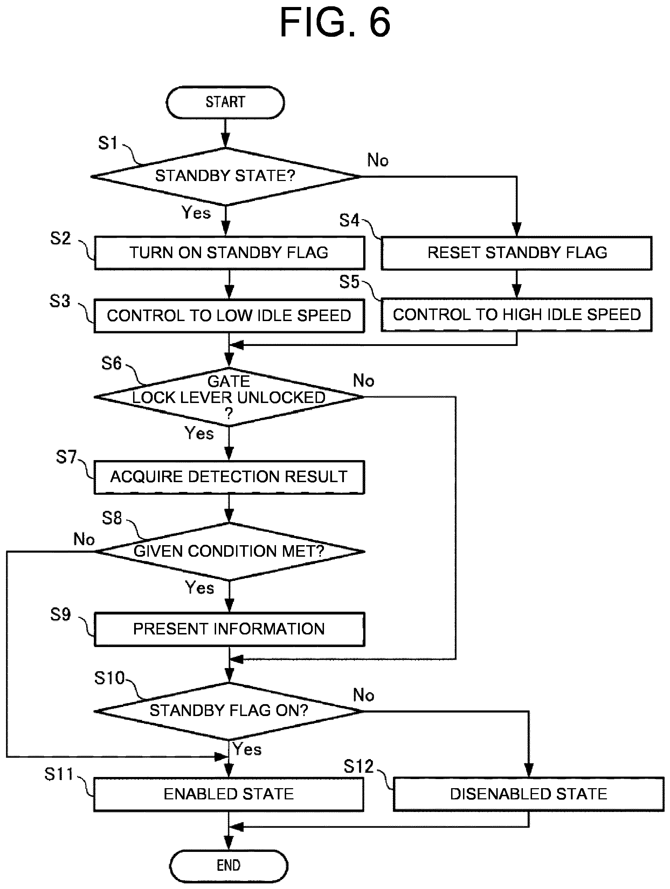

Next, details of the control method according to the present embodiment, i.e., a specific action of the control system 1, are described with reference to a flowchart in Fig. 6.

Further, as a prerequisite, the control system 1 sets, to "0" (off) as the initial value, a standby flag value prepared in the nonvolatile memory, etc. At the time when the engine 40 of the work machine 3 is started (ignition on), the control system 1 starts the processes from step S1 onward, and thereafter, repeatedly executes the processes from steps S1 to S12.

In step S1, the determination processing unit 13 of the control system 1 determines whether or not the work machine 3 is in the standby state. In the present embodiment, the determination processing unit 13 determines whether or not the work machine 3 is in the standby state based on the operation state of the operation unit 35 operated by the user (operator); when the operation unit 35 is not operated, such as the operation lever being in the neutral position, the determination processing unit 13 determines that the work machine 3 is in the standby state (S1: Yes), and moves the process to step S2. Meanwhile, when the operation unit 35 is operated, such as the operation lever being in the position other than the neutral position, the determination processing unit 13 determines that the work machine 3 is in the action state (S1: No), and moves the process to step S4.

At step S2, the determination processing unit 13 of the control system 1 sets the standby flag value to "1" (on). Here, the value "1" (on) of the standby flag shows that the work machine 3 is in the standby state, and the value "0" (off) of the standby flag shows that the work machine 3 is not in the standby state (that is, in the action state).

In step S3, the deceleration processing unit 16 of the control system 1 controls the speed of the engine 40 of the work machine 3 to the low idle speed lower than the given value. That is, when the work machine 3 is determined to be in the standby state (S1: Yes), the deceleration processing unit 16, by the auto deceleration function, controls the speed of the engine 40 to be lower than the given value.

At step S4, the determination processing unit 13 of the control system 1 resets the standby flag value to "0" (off). That is, when the standby flag value is set to "1" (on) at step S2, the standby flag value is reset at step S4. Thereby, the value "0" (off) of the standby flag shows that the work machine 3 is in the action state.

In step S5, the deceleration processing unit 16 of the control system 1 controls the speed of the engine 40 of the work machine 3 to a high idle speed higher than the given value. That is, when the work machine 3 is determined to be in the action state (S1: No), the deceleration processing unit 16, by the auto deceleration function, controls the speed of the engine 40 to be higher than the given value.

Step S6 determines whether or not the gate lock lever 463 is in the unlocked state (down position). At this time, the determination processing unit 13 of control system 1, by the gate lock switch 462 being on or off, determines whether the gate lock lever 463 is locked (up position) or unlocked (down position). When the gate lock switch 462 is on, the determination processing unit 13 determines that the unlocked state of the gate lock lever 463 is unlocked (S6: Yes), and moves the process to step S7. Here, when the gate lock lever 463 is unlocked, the first control valve 461 of the first limit unit 46 on the primary pressure side of the pilot oil path is open, causing "the work machine 3 is operable". Meanwhile, when the gate lock switch 462 is off, determination processing unit 13 determines that the gate lock lever 463 is locked (S6: No), and moves the process to step S10.

At step S7, from the detection processing unit 14, the acquisition processing unit 11 of the control system 1 acquires the detection result of the object Ob1 around the machine body 30. That is, based on the outputs of the left camera 341, the right camera 342 and the rear camera 343, the detection processing unit 14 outputs the detection result showing whether or not the object Ob1 is present in the monitoring area A1. The acquisition processing unit 11 acquires the detection result from the detection processing unit 14.

At step S8, the determination processing unit 13 of the control system 1 determines whether or not the detection result meets the given condition. At this time, when the object Ob1 (in this case, "person") is present in the monitoring area A1, the determination processing unit 13 determines that the detection result meets the given condition (S8: Yes), and moves the process to step S9. Meanwhile, when the object Ob1 (in this case, "person") is not present in the monitoring area A1, the determination processing unit 13 determines that the detection result fails to meet the given condition (S8: No), and moves the process to step S11.

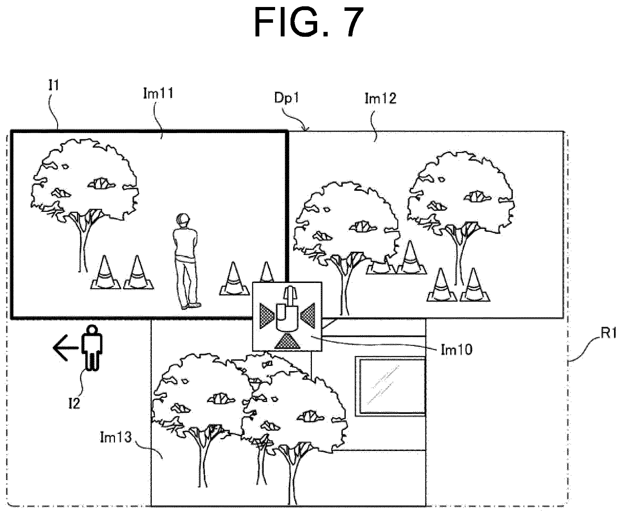

At step S9, the alarm processing unit 15 of the control system 1 presents information (outputs alarm) stating that the detection result of the detection processing unit 14 meets the given condition, i.e., that the object Ob1 is present in the monitoring area A1 around the machine body 30. At this time, the alarm processing unit 15 causes the display unit 23 of the display device 2 to display detection result information I1, I2 (see Fig. 7), and causes the sound output unit 36 to output the alarm sound. Or, the alarm processing unit 15 only displays the detection result information I1 and I2 on the display unit 23 of the display device 2. The detection result information I1, I2 displayed on the display unit 23 of the display device 2 is to be described in detail in the column "[3.3] Display Screen". Thus, the operator (user U1) can recognize the object Ob1 present around the machine body 30.

At step S10, the state switch processing unit 12 of the control system 1 determines whether or not the standby flag value is "1" (on). That is, when it is determined at step S1 that the work machine 3 is in the standby state (S1: Yes) thereby to set the detection flag set to "on" (S2), the state switch processing unit 12 determines that the standby flag value is "1" (on) (S10: Yes), and moves the process to step S11. Meanwhile, when it is determined at step S1 that the work machine 3 is not in the standby state (S1: No) thereby to keep the detection flag off, the state switch processing unit 12 determines that the standby flag value is "0" (off) (S10: No), and moves the process to step S12.

In step S11, the state switch processing unit 12 of the control system 1 puts the operation unit 35 in the enabled state. At this time, the state switch processing unit 12 puts the second control valve 471 of the second limit unit 47 in the open state thereby to put the operation unit 35 in the enabled state. This causes "the work machine 3 is operable", and the actuator is actuated in response to the operation of the operation unit 35.

In step S12, the state switch processing unit 12 of the control system 1 puts the operation unit 35 in the disabled state. At this time, the state switch processing unit 12 puts the second control valve 471 of the second limit unit 47 in the shut-off state thereby to put the operation unit 35 in the disabled state. This causes "the work machine 3 is inoperable", and the actuator is forcibly stopped regardless of the operation of the operation unit 35.

After step S11 or step S12, the control system 1 ends the series of actions.

The control system 1 repeatedly executes the processes at step S1 to step S12. However, the flowchart shown in Fig. 6 is merely one example; thus, the process may be properly added or omitted, and the order of the processes may be properly replaced.

As described above, the control method according to the present embodiment, in the standby state of the work machine 3 (S10: Yes), when the gate lock lever 463 is in the unlocked state (S6: Yes) and if the detection result meets the given condition (S8: Yes), enables the operation unit 35 (S11). Thus, when the work machine 3 is in the standby state, the operation unit 35 can be enabled even if the object Ob1 (person) is present around the work machine 3. Thus, regardless of the operation state of the gate lock lever 463, the operation (action) of the work machine 3 is not uniformly prohibited when the object Ob1 (person) is present around the work machine 3. Thus, for example, when the operator, while recognizing the person present around the work machine 3, works carefully, the operator can operate the work machine 3 without waiting for the person away from the monitoring area A1. As a result, it is possible to provide the work machine control system 1, the work machine 3, the work machine 3's control method, and the work machine control program which easily decrease an annoyance felt by the operator.

Further, the control method according to the present embodiment is used in the action state of the work machine 3 (S10: No).

When the gate lock lever 463 is in the unlocked state (S6: Yes) and the detection result meets the given condition (S8: Yes), the state switch processing unit 12 puts the operation unit 35 in the disabled state (S12). Thus, it is possible to disable the operation unit 35 when the object Ob1 (person) is present around the work machine 3 only if the work machine 3 is in the action state. Thus, regardless of the operation state of the gate lock lever 463, the operation (action) of the work machine 3 is not uniformly prohibited when the object Ob1 (person) is present around the work machine 3. Thus, for example, when the operator, while recognizing the person present around the work machine 3, works carefully, the operator can operate the work machine 3 without waiting for the person away from the monitoring area A1. As a result, it is possible to provide the work machine control system 1, the work machine 3, the work machine 3's control method, and the work machine control program which easily decrease an annoyance felt by the operator.

In particular, in the control method according to the present embodiment, the speed of the engine 40 of the work machine 3 is so controlled as to be lower than the given value when the work machine 3 is in the standby state, and the speed of the engine 40 is so controlled as to be higher than the given value when the work machine 3 is in the action state. Thus, the state switch processing unit 12, when, after the speed of the engine 40 being higher than the given value (S5), the gate lock lever 463 is in the unlocked state (S6: Yes), and the detection result meets the given condition (S8: Yes), puts the operation unit 35 in the disabled state (S12). Thus, when the speed of the engine 40 is at high idle speed, the operation unit 35 is disabled if the object Ob1 (person) is present around the work machine 3.

Thus, when the action speed of the hydraulic actuator driven with the hydraulic oil is relatively high because of the hydraulic oil discharge rate (flowrate) of the hydraulic pump 41 being high, due to the speed of the engine 40 (speed of the hydraulic pump 41) being high, the operation unit 35 can be disabled.

Conversely, when the action speed of the hydraulic actuator driven with the hydraulic oil is relatively low because of the hydraulic oil discharge rate (flowrate) of the hydraulic pump 41 being low, due to the speed of the engine 40 (speed of the hydraulic pump 41) being low, the operation unit 35 can be enabled. Thus, when the operation unit 35 is enabled despite the object Ob1 (person) being present around the work machine 3, the output (action speed) of the actuator is limited; thus, it is easy to prevent the work machine 3 from contacting the object Ob1 (person).

In the present embodiment, information is presented when the actuator is allowed to act with the operation unit 35 in the enabled state, despite the object Ob1 being present (person) around the work machine 3, because the work machine 3 is in the standby state (S1: Yes, S10: Yes). In short, the alarm processing unit 15, when the state switch processing unit 12 puts the operation unit 35 in the enabled state (S11), despite at least the gate lock lever 463 being in the unlocked state (S6: Yes), and the detection result meeting the given condition (S8: Yes), presents information on the detection result (S9). This makes it possible to alert the operator, because information on the detection result is presented, when the operation unit 35 is enabled, despite the object Ob1 (person) being present around the work machine 3.

Further, in the present embodiment, even when the work machine 3 is not in the standby state (S1: No, S10: No), information is presented if the object Ob1 (person) is present around the work machine 3. In short, the alarm processing unit 15 presents the information on the detection result (S9), when at least the gate lock lever 463 is in the unlocked state (S6: Yes), and the detection result meets the given condition (S8: Yes). This makes it possible to alert the operator when the object Ob1 (person) is present around the work machine 3, because information on the detection result is presented regardless of whether the operation unit 35 is in the enabled state or the disabled state.

### Display Screen

Next, the configuration of the display screen Dp1 displayed on the display unit 23 of the display device 2 by the control method according to the present embodiment will be described with reference to Fig. 7. In the drawings showing the display screen Dp1 displayed on the display unit 23 of the display device 2, such as Fig. 7, a dashed-dotted line showing a region, a leading line, and a reference sign are each merely for an illustrative purpose, and may not be actually displayed at the display device 2.

As shown in Fig. 7, the display screen Dp1 displays captured images Im11, Im12, Im13 of the monitoring area A1, and detection result information I1, I2 and the like showing the detection result of the detection processing unit 14. Fig. 7 shows, of the display screen Dp1, only a region R1 displaying the captured images Im11, Im12, Im13 and the like of the monitoring area A1, and omits any region other than the region R1. The captured image Im11 is an image of the small area A11 that is captured by the left camera 341 and that is on the left of the drive unit 321, and the captured image Im12 is an image of the small area A12 that is captured by the right camera 342 and that is on the right of the drive unit 321. The captured image Im13 is an image of the small area A13 that is captured by the rear camera 343 and that is behind the drive unit 321.

The control system 1 causes the captured images Im11, Im12, Im13, which are acquired by the detection processing unit 14, to be displayed in real time. An icon Im10, which imitates the machine body 30 as seen from the information, is displayed in the center portion of the region R1. The icon Im10 schematically shows the positional relation of imaging ranges (small areas A11, A12, and A13) of the left camera 341, right camera 342 and rear camera 343, as seen from the machine body 30.

The detection result information I1 is, of the captured images Im11, Im12, Im13, a band-shaped (frame-shaped) graphical image that highlights the captured image including the object Ob1. The detection result information I2 is a graphical image showing the direction in which the object Ob1 is present viewed from the drive unit 321. The example in Fig. 7 assumes a case where the object Ob1 (here, "person") is present in the small area A11 that is captured by the left camera 341 and that is on the left of the drive unit 321. Thus, of the captured images Im11, Im12, Im13, the captured image Im11 is highlighted in the detection result information I1; and the detection result information I2 showing the object Ob1 present on the left of the drive unit 321 is displayed below the captured image Im11.

The display mode of the detection result information I1, I2 is preferably changed according to the object Ob1's position in the monitoring area A1. For example, the detection result information I1, I2's display mode, such as display color, size, or display pattern (including blinking pattern and the like), is changed according to the object Ob1's position in the monitoring area A1. For example, the closer the object Ob1 is to the machine body 30, the display color is changed to a more prominent display mode of the detection result information I1, I2; as an example, the object Ob1 approaching the machine body 30 changes the display color of the detection result information I1, I2 from yellow to red.

Thus, the display screen Dp1 not only displays the captured images Im11, Im12, Im13 of the monitoring area A1, but also displays, as the detection result information I1, I2, the detection result of the object Ob1 in the monitoring area A1. Thus, the operator (user U1), by viewing the display screen Dp1, can easily check whether or not the object Ob1 is present in the monitoring area A1. Thus, on the display screen Dp1 displayed on the display device 2, the operator (user U1) can check the situations at the work machine 3's sides and rear which are likely to be blind spots from the drive unit 321. Thus, compared to the configuration in which only the detection result information I1, I2 are displayed; when the object Ob1 is present in the monitoring area A1, it is easier to grasp in detail, on the display screen Dp1, the situation of the object Ob1.

### [4] Modified Examples

A description will hereinafter be made on modified examples of the first embodiment. The modified examples, which will be described below, can be applied in proper combination.

The control system 1 according to the present disclosure includes the computer system. The computer system has, as hardware, one or more processors and one or more storages. The processor, by executing the program recorded in the storage of the computer system, realizes the function as the control system 1 in the present disclosure. The program may be preliminarily recorded in the storage of the computer system, may be provided through an electric communication line, or may be provided in a manner to be recorded in a non-transitory recording medium, such as a memory card, an optical disk, a hard disk drive, or the like, each of which is readable by the computer system. Further, part of or all of the functional units included in the control system 1 may be composed of an electronic circuit.

Further, collecting at least part of the functions of the control system 1 in one case is not an essential configuration for the control system 1, and the components of the control system 1 may be provided in a multiplicity of cases in a distributed manner. Conversely, in the first embodiment, functions that are distributed to a multiplicity of devices (such as the control system 1 and the display device 2) may be collected in one case. Further, at least part of the functions of the control system 1 may be realized by a cloud (cloud computing) or the like.

Further, the power source of the work machine 3 is not limited to the diesel engine, but may be, for example, the engine 40 other than the diesel engine, a motor (an electric motor), or a hybrid power source that includes the engine 40 and the motor (electric motor).

Further, the display device 2 is not limited to a dedicated device, but may be a general-purpose terminal such as a laptop computer, a tablet terminal, or a smartphone. Further, the display unit 23 is not limited to a mode that directly displays a display screen, such as a liquid crystal display or an organic EL display, but may be a configuration that displays the display screen by projection, such as a projector.

Further, as a mode for inputting information of the operation unit 22, a mode other than the push button switch, the touch screen, and the operation dial may be employed. For example, the operation unit 22 may employ any mode such as a keyboard, a pointing device such as mouse, a voice input, a gesture input, or inputting an operation signal from another terminal.

Further, the output (information presentation) mode of the alarm in the alarm processing unit 15 is not limited to display on the display unit 23 of the display device 2 and the alarm sound's outputting from the sound output unit 36. For example, the alarm processing unit 15 may output the alarm by any one of the display on the display unit 23 of the display device 2 or the alarm sound from the sound output unit 36, or by other means such as vibration (vibration function), sending to another terminal or writing in the non-transient recording medium, or a combination of the above.

Further, the sensors for detecting the object Ob1 in the monitoring area A1 around the machine body 30 are not limited to the left camera 341, the right camera 342 and the rear camera 343, and may include one, two, or four or more cameras (image sensors). Further, for example, a camera that can capture images in all directions as seen from the work machine 3, such as a 360-degree camera, may be used to detect the object Ob1 in the monitoring area A1. Further, the sensors for detecting the object Ob1 in the monitoring area A1 may include, in addition to or in place of the camera, an action sensor, a sonar sensor, a radar, or LiDAR (Light Detection and Ranging), for example. Here, the sensor that detects the object Ob1 in the monitoring area A1 may be a 3D sensor that measures the distance to the object Ob1 by the TOF (Time Of Flight) that measures the distance to the measurement distance point based on the round trip time for light or sound to reach the distance measurement point and return.

Further, the detection processing unit 14, which detects the object Ob1 around the machine body 30, is not the configuration essential for the control system 1. For example, the detection processing unit 14 may be included in a detection system other than the control system 1; in this case, the acquisition processing unit 11 of the control system 1 acquires, from outside (detection system) of the control system 1, the detection result of the object Ob1 around the machine body 30 of the work machine 3.

Further, the object Ob1 may include, in addition to or in place of a "person", a mobile object such as a vehicle (including other work machine), structures such as walls and pillars, plants, animals, steps, ditches, or other obstacles.

Further, the actuator of each portion of the machine body 30 is not limited to the hydraulic actuator, but may be, for example, a pneumatic actuator driven by compressed air or other air pressure, or an electric actuator driven by an electric power supply, or a combination thereof.

Further, the state switch processing unit 12 puts the operation unit 35 in the enabled state not only when, in the standby state of the work machine 3, the gate lock lever 463 is in the unlocked state and the detection result meets the given condition. For example, when the detection result fails to meet the given condition, the state switch processing unit 12 may enable the operation unit 35, regardless of whether the work machine 3 is in the standby state or the action state. Similarly, the state switch processing unit 12 puts the operation unit 35 in the disabled state not only when, in the action state of the work machine 3, the gate lock lever 463 is in the unlocked state and the detection result meets the given condition. For example, when, in the action state of the work machine 3, the gate lock lever 463 is in the locked state, the state switch processing unit 12 may disable the operation unit 35, regardless of whether or not the detection result meets the given condition.

Further, it is not a configuration essential for the control system 1 that the given condition includes the object Ob1 being present in the monitoring area A1 around the work machine 3. It is not essential that the determination processing unit 13 should determine the standby state and action state of the work machine 3 based on the operation state of the operation unit 35 operated by the user. Further, it is not essential that the deceleration processing unit 16 should control the speed of the engine 40 of the work machine 3 to be lower than the given value when the work machine 3 is in the standby state and control the speed of the engine 40 to be higher than the given value when the work machine 3 is in the action state. Further, it is not essential that the state switch processing unit 12, when, after the speed of the engine 40 being higher than the given value, the gate lock lever 463 is in the unlocked state, and the detection result meets the given condition, should put the operation unit 35 in the disabled state.

Further, it is not essential that information on the detection result should be presented when the state switch processing unit 12 puts the operation unit 35 in the enabled state, despite the gate lock lever 463 being in the unlocked state, and the detection result meeting the given condition. Further, it is not essential that information on the detection result should be presented when the gate lock lever 463 is in the unlocked state and the detection result meets the given condition. Further, it is not an essential configuration for the state switch processing unit 12 to enable the operation unit 35 when, in the standby state of the work machine 3, the gate lock lever 463 is in the unlocked state and the detection result meets the given condition.

### (Second Embodiment)

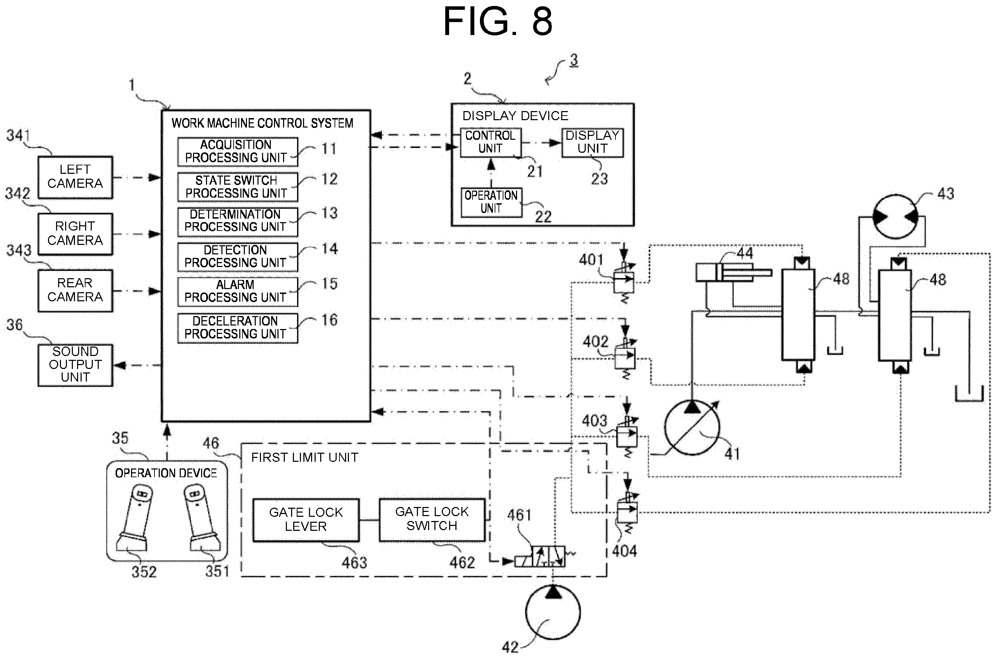

The work machine 3, as shown in Fig. 8, differs from the work machine 3 according to the first embodiment in the configuration related to the operation of the operation unit 35. Hereinafter, the same configurations as those in the first embodiment will be denoted by the same reference signs, and the description thereof will be properly omitted.

Fig. 8 schematically shows a hydraulic circuit and electric circuit (electric connection) of the work machine 3 according to the present embodiment. In Fig. 8, a solid line shows a high-pressure oil path (for hydraulic oil), a dotted line shows a low-pressure oil path (for pilot oil), and a dashed-dotted line arrow shows an electric signal path.

As shown in Fig. 8, the work machine 3 includes a multiplicity of control valves 401 to 404, in addition to the hydraulic pump 41, the hydraulic motor 43, the hydraulic cylinder 44, the pilot pump 42, the direction switch valve (control valve) 48 and the like. Further, Fig. 8 properly omits illustration of the flowrate limit unit 49 and the like. In Fig. 8, only one hydraulic cylinder 44 for driving the boom 332 is shown; however, the same hydraulic circuit is configured also for the hydraulic cylinder 44 for driving the arm 333 or the bucket 331, etc. Further, in Fig. 8, only the hydraulic motor 43 of the run unit 31 is shown, but the same hydraulic circuit is configured also for the hydraulic motor of the swing unit 32.

The multiplicity of control valves 401 to 404 replaces the second control valve 471 and the remote control valve 45 (see Fig. 2) each as the second limit unit 47. Specifically, the control valves 401 to 404 are provided on the pilot oil's supply paths to the respective direction switch valves 48. Further, the pilot oil's upstream viewed from the control valves 401 to 404 is provided with the first control valve 461. The control valves 401 to 404 are each a solenoid control valve (electromagnetic valve), and are inserted to between the direction switch valve 48 and the pilot pump 42, respectively. Each of the control valves 401 to 404 is connected to the control system 1, and moves according to the control signal (supply current) from the control system 1. Specifically, the control system 1 controls the control valves 401 to 404 according to the operation of the operation unit 35 (operation lever), and directs, for example, the deployment and reduction actions of the work unit 33. Each of the control valves 401 to 404 is here assumed to be a (solenoid type) proportional control valve, but can also be, a switchable open/close valve that opens/shuts off the flow path, for example.

The above direction switch valve and control valve are provided not only for the hydraulic circuits of the hydraulic cylinder 44 for driving the boom 332 and the hydraulic motor 43 of the run unit 31, but also for the hydraulic circuits of the hydraulic cylinders 44 for driving the arm 333 or bucket 331 and the hydraulic motor of the swing unit 32. Thus, according to the operation unit 35's operation, the run unit 31, the swing unit 32, and the work unit 33 can be moved.

In the present embodiment, the operation unit 35 is an electric operation unit 35, and outputs, to the control system 1, the electric signal (operation signal) that accords to the user (operator)'s operation, thereby to receive various operations by the user. As one example in the present embodiment, the operation unit 35 includes a pair of operation levers 351 and 352 (see Fig. 8). The operation lever 351 is positioned on the right hand side as viewed from the user (operator) boarding the drive unit 321, and the operation lever 352 is positioned on the left hand side as viewed from the user boarding the drive unit 321. Thus, the user holds the operation lever 351 with the right hand and the operation lever 352 with the left hand, for example, and separately operates the pair of operation levers 351 and 352 thereby to cause the work machine 3 to perform various actions.

The operation levers 351 and 352 are stick-type operants, respectively, and are operated to tilt to any of "front", "rear", "left", and "right", for example, thereby to output the electric signal (operation signal) that accords to the operation. The operation unit 35, as an example, outputs different operation signals, corresponding respectively to an operation to tilt the operation lever 351 to the front, an operation to tilt the operation lever 351 to the right, an operation to tilt the operation lever 352 to the front, and an operation to tilt the operation lever 352 to the right.

In the work machine 3 of the present embodiment, the state switch processing unit 12 maintains the control valves 401 to 404 in the shut-off state regardless of the operation of the operation unit 35 (operation lever), thereby achieving the operation unit 35 in the disabled state. This means that in the enabled state of the operation unit 35, the control valves 401 to 404 are controlled in response to the operation signal from the operation unit 35 thereby to actuate the actuator, whereas in the disabled state of the operation unit 35, the actuator is forcibly stopped. Or, the state switch processing unit 12, by disenabling the operation signal from the operation unit 35, may achieve the disabled state of the operation unit 35.

In this configuration, the action (control method) of the control system 1 is the same as in the first embodiment. The configuration according to the second embodiment can be employed in proper combination with the various configurations (including modifications) described in the first embodiment.

### REFERENCE SIGNS LIST

1: work machine control system
3: work machine
11: acquisition processing unit
12: state switch processing unit
13: determination processing unit
15: alarm processing unit
16: deceleration processing unit
30: machine body
35: operation unit
40: engine
43: hydraulic motor (actuator)
44: hydraulic cylinder (actuator)
463: gate lock lever
A1: monitoring area
Ob1: object
U1: user

## Claims

1. A work machine control system (1) for a work machine (3) provided with an actuator (43, 44) actuated in response to an operation of an operation lever (35) and an engine (40), the work machine control system (1) comprising:
an acquisition processing unit (11) configured to acquire a detection result of an object or person around a machine body (30) of the work machine (3);
a state switch processing unit (12) that, apart from a gate lock lever (463) capable of switching between an unlocked state capable of operating the work machine (3) and a locked state incapable of operating the work machine (3), is capable of switching between an enabled state and disabled state of the operation lever (35),
**characterized in that** the work machine control system (1) comprises:
a determination processing unit (13) configured to determine:
a standby state of the work machine (3) in which at least the control system (1) and the engine (40) of the work machine (3) are in action, and the operation lever (35) is not operated, and
an action state of the work machine (3) in which at least the control system (1) and the engine (40) are in action, and the operation lever (35) is operated, based on the operation state of the operation lever (35) operated by a user;
a deceleration processing unit (16) configured to, when the work machine (3) is in the standby state, controls a speed of the engine (40) of the work machine (3) to be lower than a given value, and, when the work machine (3) is in the action state, to control the speed of the engine (40) to be higher than the given value, and
wherein the state switch processing unit (12), in the standby state of the work machine (3), when the gate lock lever (463) is in the unlocked state, and the detection result meets a given condition, is configured to put the operation lever (35) in the enabled state,
wherein the given condition includes an object or person (OB1) being present in a monitoring area around the work machine (3).

2. The work machine control system (1) as claimed in claim 1, wherein
the state switch processing unit (12) puts the operation lever (35) in the disabled state, when, after the speed of the engine (40) being higher than the given value, the gate lock lever (463) is in the unlocked state and the detection result meets the given condition.

3. The work machine control system (1) as claimed in claim 1 to 2, further comprising:
an alarm processing unit (15) configured to present information on the detection result, when the state switch processing unit (12) puts the operation lever (35) in the enabled state despite at least the gate lock lever (463) being in the unlocked state and the detection result meeting the given condition.

4. A work machine (3), comprising:
the work machine control system according to any one of claims 1 to 3; and
the machine body (30).

5. A work machine control method for a work machine (3) provided with an actuator (43, 44) actuated in response to an operation of an operation lever (35) and an engine (40) comprising:
acquiring a detection result of an object or person around a machine body (30) of a work machine (3);
in a standby state of the work machine (3), controlling a speed of the engine (40) of the work machine (3) to be lower than a given value, and, in an action state of the work machine (3), controlling the speed of the engine (40) to be higher than the given value, and
apart from a gate lock lever (463) capable of switching between an unlocked state capable of operating the work machine (3) and a locked state incapable of operating the work machine (3), putting the operation lever (35) in the enabled state, in the standby state of the work machine (3), when the gate lock lever (463) is in the unlocked state and the detection result meets a given condition, wherein the given condition includes an object or person (OB1) being present in a monitoring area around the work machine (3).

6. A work machine control program for causing one or more processors to execute the work machine control method according to claim 5.

## Patentansprüche

1. Arbeitsmaschinensteuersystem (1) für eine Arbeitsmaschine (3), die mit einem Aktuator (43, 44) versehen ist, der in Reaktion auf eine Bedienung eines Bedienungshebels (35) und einen Motor (40) betätigt wird, wobei das Arbeitsmaschinensteuersystem (1) Folgendes umfasst:
eine Erfassungsverarbeitungseinheit (11), die dazu ausgelegt ist, ein Detektionsergebnis eines Objekts oder einer Person um einen Maschinenkörper (30) der Arbeitsmaschine (3) zu erfassen;
eine Zustandsumschaltungsverarbeitungseinheit (12), die, abgesehen von einem Torverriegelungshebel (463), der in der Lage ist, zwischen einem nicht verriegelten Zustand, in dem die Arbeitsmaschine (3) bedient werden kann, und einem verriegelten Zustand, in dem die Arbeitsmaschine (3) nicht bedient werden kann, umzuschalten, in der Lage ist, zwischen einem aktivierten Zustand und einem deaktivierten Zustand des Bedienungshebels (35) umzuschalten,
**dadurch gekennzeichnet, dass** das Arbeitsmaschinensteuersystem (1) Folgendes umfasst:
eine Bestimmungsverarbeitungseinheit (13), die dazu ausgelegt ist, Folgendes zu bestimmen:
einen Standbyzustand der Arbeitsmaschine (3), in dem mindestens das Steuersystem (1) und der Motor (40) der Arbeitsmaschine (3) aktiv sind und der Bedienungshebel (35) nicht bedient wird, und
einen Aktionszustand der Arbeitsmaschine (3), in dem mindestens das Steuersystem (1) und der Motor (40) aktiv sind und der Bedienungshebel (35) bedient wird, auf Basis des Bedienungszustands des Bedienungshebels (35), der von einem Benutzer bedient wird;
eine Verzögerungsverarbeitungseinheit (16), die dazu ausgelegt ist, wenn sich die Arbeitsmaschine (3) im Standbyzustand befindet, eine Drehzahl des Motors (40) der Arbeitsmaschine (3) derart zu steuern, dass sie niedriger ist als ein gegebener Wert, und, wenn sich die Arbeitsmaschine (3) im Aktionszustand befindet, die Drehzahl des Motors (40) derart zu steuern, dass sie höher ist als der gegebene Wert, und
wobei die Zustandsumschaltungsverarbeitungseinheit (12) dazu ausgelegt ist, den Bedienungshebel (35) in den aktivierten Zustand zu bringen, wenn der Torverriegelungshebel (463) im Standbyzustand der Arbeitsmaschine (3) im nicht verriegelten Zustand ist und das Detektionsergebnis eine gegebene Bedingung erfüllt,
wobei die gegebene Bedingungen beinhaltet, dass ein Objekt oder eine Person (OB1) in einem Überwachungsbereich um die Arbeitsmaschine (3) vorhanden ist.

2. Arbeitsmaschinensteuersystem (1) nach Anspruch 1, wobei
die Zustandsumschaltungsverarbeitungseinheit (12) den Bedienungshebel (35) in den deaktivierten Zustand bringt, wenn der Torverriegelungshebel (463) im nicht verriegelten Zustand ist und das Detektionsergebnis die gegebene Bedingung erfüllt, nachdem die Drehzahl des Motors (40) höher ist als der gegebene Wert.

3. Arbeitsmaschinensteuersystem (1) nach Anspruch 1 bis 2, das ferner Folgendes umfasst:
eine Alarmverarbeitungseinheit (15), die dazu ausgelegt ist, Informationen über das Detektionsergebnis zu präsentieren, wenn die Zustandsumschaltungsverarbeitungseinheit (12) den Bedienungshebel (35) in den aktiven Zustand bringt, obwohl mindestens der Torverriegelungshebel (463) im nicht verriegelten Zustand ist und das Detektionsergebnis die gegebene Bedingung erfüllt.

4. Arbeitsmaschine (3), die Folgendes umfasst:
das Arbeitsmaschinensteuersystem gemäß einem der Ansprüche 1 bis 3; und
den Maschinenkörper (30).

5. Arbeitsmaschinensteuerverfahren für eine Arbeitsmaschine (3), die mit einem Aktuator (43, 44) versehen ist, der in Reaktion auf eine Bedienung eines Bedienungshebels (35) und einen Motor (40) betätigt wird, das Folgendes umfasst:
Erfassen eines Detektionsergebnisses eines Objekts oder einer Person um einen Maschinenkörper (30) einer Arbeitsmaschine (3) ;
in einem Standbyzustand der Arbeitsmaschine (3) Steuern einer Drehzahl des Motors (40) der Arbeitsmaschine (3) derart, dass sie niedriger ist als ein gegebener Wert, und, in einem Aktionszustand der Arbeitsmaschine (3), Steuern der Drehzahl des Motors (40) derart, dass sie höher ist als der gegebene Wert, und
Bringen des Bedienungshebels (35) im Standbyzustand der Arbeitsmaschine (3) in den aktiven Zustand, wenn ein Torverriegelungshebel (463) im nicht verriegelten Zustand ist und das Detektionsergebnis eine gegebene Bedingung erfüllt, abgesehen von einem Torverriegelungshebel (463), der in der Lage ist, zwischen einem nicht verriegelten Zustand, in dem die Arbeitsmaschine (3) bedient werden kann, und einem verriegelten Zustand, in dem die Arbeitsmaschine (3) nicht bedient werden kann, umzuschalten, wobei die gegebene Bedingung beinhaltet, dass ein Objekt oder eine Person (OB1) in einem Überwachungsbereich um die Arbeitsmaschine (3) vorhanden ist.

6. Arbeitsmaschinensteuerprogramm zum Veranlassen von einem oder mehreren Prozessoren, dass Arbeitsmaschinensteuerverfahren gemäß Anspruch 5 auszuführen.

## Revendications

1. Système de commande (1) de machine de travail pour une machine de travail (3) pourvue d'un actionneur (43, 44) actionné en réponse à une manœuvre d'un levier de manœuvre (35) et d'un moteur (40), le système de commande (1) de machine de travail comprenant :
une unité de traitement d'acquisition (11) configurée pour acquérir un résultat de détection d'un objet ou d'une personne autour d'un corps de machine (30) de la machine de travail (3) ;
une unité de traitement de commutation **d'état** (12) qui, indépendamment d'un levier de verrouillage de porte (463) pouvant commuter entre un état déverrouillé où il est possible de manœuvrer la machine de travail (3) et un état verrouillé où il n'est pas possible de manœuvrer la machine de travail (3), est capable de commuter entre un état activé et un état désactivé du levier de manœuvre (35),
**caractérisé en ce que** le système de commande (1) de machine de travail comprend :
une unité de traitement de détermination (13) configurée pour déterminer :
un état de veille de la machine de travail (3) dans lequel au moins le système de commande (1) et le moteur (40) de la machine de travail (3) sont en action, et le levier de manœuvre (35) n'est pas manœuvré, et
un état d'action de la machine de travail (3) dans lequel au moins le système de commande (1) et le moteur (40) sont en action, et le levier de manœuvre (35) est manœuvré, sur la base de l'état de manœuvre du levier de manœuvre (35) manœuvré par un utilisateur ;
une unité de traitement de décélération (16) configurée pour, lorsque la machine de travail (3) est à l'état de veille, commander une vitesse du moteur (40) de la machine de travail (3) afin qu'elle soit inférieure à une valeur donnée, et lorsque la machine de travail (3) est à l'état d'action, pour commander la vitesse du moteur (40) afin qu'elle soit supérieure à la valeur donnée, et
dans lequel, à l'état de veille de la machine de travail (3), lorsque le levier de verrouillage de porte (463) est à l'état déverrouillé et que le résultat de détection satisfait à une condition donnée, l'unité de traitement de commutation d'état (12) est configurée pour mettre le levier de manœuvre (35) à l'état activé,
dans lequel la condition donnée implique la présence d'un objet ou d'une personne (OB1) dans une zone de surveillance autour de la machine de travail (3).

2. Système de commande (1) de machine de travail selon la revendication 1, dans lequel
l'unité de traitement de commutation d'état (12) met le levier de manœuvre (35) à l'état désactivé lorsque, après que la vitesse du moteur (40) s'est trouvée supérieure à la valeur donnée, le levier de verrouillage de porte (463) est à l'état déverrouillé et que le résultat de détection satisfait à la condition donnée.

3. Système de commande (1) de machine de travail selon la revendication 1 et 2, comprenant en outre :
une unité de traitement d'alarme (15) configurée pour présenter des informations sur le résultat de détection lorsque l'unité de traitement de commutation d'état (12) met le levier de manœuvre (35) à l'état activé malgré le fait qu'au moins le levier de verrouillage de porte (463) soit à l'état déverrouillé et que le résultat de détection satisfait à la condition donnée.

4. Machine de travail (3), comprenant :
le système de commande de machine de travail selon l'une des revendications 1 à 3 ; et
le corps de machine (30).

5. Procédé de commande de machine de travail pour une machine de travail (3) pourvue d'un actionneur (43, 44) actionné en réponse à une manœuvre d'un levier de manœuvre (35) et d'un moteur (40) comprenant les étapes suivantes :
acquérir un résultat de détection **d'un** objet ou **d'une** personne autour **d'un** corps de machine (30) **d'une** machine de travail (3) ;
dans un état de veille de la machine de travail (3), commander une vitesse du moteur (40) de la machine de travail (3) afin qu'elle soit inférieure à une valeur donnée, et dans un état d'action de la machine de travail (3), commander la vitesse du moteur (40) afin qu'elle soit supérieure à la valeur donnée, et
indépendamment d'un levier de verrouillage de porte (463) pouvant commuter entre un état déverrouillé où il est possible de manœuvrer la machine de travail (3) et un état verrouillé où il n'est pas possible de manœuvrer la machine de travail (3), mettre le levier de manœuvre (35) à l'état activé, à l'état de veille de la machine de travail (3), lorsque le levier de verrouillage de porte (463) est à l'état déverrouillé et que le résultat de détection satisfait à une condition donnée, dans lequel la condition donnée implique la présence d'un objet ou d'une personne (OB1) dans une zone de surveillance autour de la machine de travail (3).

6. Programme de commande de machine de travail pour amener un ou plusieurs processeurs à exécuter le procédé de commande de machine de travail selon la revendication 5.
